# FASCICULE DE BREVET EUROPEEN

(11) **EP 2 542 473 B1**
(45) Date de publication et mention de la délivrance du brevet: **05.08.2015**
(21) Numéro de dépôt: 11712603.7
(22) Date de dépôt: 18.02.2011
(51) Int. Cl.: F16B 31/00, B64G 1/64, F42B 15/38

(54) **DISPOSITIF DE RACCORDEMENT A RUPTURE PYROTECHNIQUE**
ANSCHLUSSVORRICHTUNG MIT PYROTECHNISCHER BRUCHSTELLE
CONNECTING DEVICE HAVING PYROTECHNIC RUPTURE

(30) Priorité: 02.03.2010 FR 1051497
(43) Date de publication de la demande: 09.01.2013
(73) Titulaire: Airbus Defence and Space SAS, 78130 Les Mureaux (FR)
(72) Inventeur: COUSIN, Jean-Yves, F-59280 Armentières (FR)
(74) Mandataire: Gevers France
(86) Numéro de dépôt international: PCT/FR2011/050346
(87) Numéro de publication internationale: WO 2011/107690

(56) Documents cités:
- EP-A1- 0 246 958
- EP-A1- 1 319 920
- US-A- 5 109 749

## Description

La présente invention concerne un dispositif de raccordement entre deux éléments en forme de plaque, ce dispositif étant apte à être rompu au moyen d'une charge détonante, telle qu'un cordeau (ou cordon) pyrotechnique.

Quoique non exclusivement, le dispositif selon l'invention est particulièrement destiné aux domaines aéronautique et spatial pour permettre la séparation de certaines pièces d'aéronefs ou de lanceurs spatiaux. Par exemple, un tel dispositif peut assurer la liaison entre les différentes pièces des structures hautes d'un lanceur (c'est-à-dire de la coiffe protectrice de satellite) et provoquer, lorsque le cordeau pyrotechnique est activé, la séparation desdites pièces.

Par le document EP 0 246 958, on connaît déjà un tel dispositif de raccordement, fonctionnant par double découpe symétrique et comportant deux ailes sensiblement parallèles :
- qui relient des bords en regard desdits éléments, en assurant ensemble la solidité mécanique dudit raccordement,
- qui ménagent entre elles une gorge dans laquelle est logé un cordeau pyrotechnique de section oblongue à flancs plats et extrémités arrondies, lesdits flancs plats étant sensiblement parallèles et respectivement disposés en regard desdites ailes, et
- qui sont pourvues chacune d'une zone de rupture, lesdites zones de rupture des deux ailes se trouvant du même côté desdits éléments.

Dans le dispositif de raccordement de ce document antérieur, les zones de rupture présentent une section amincie dans le plan perpendiculaire aux flancs plats du cordeau, et donc une résistance moindre au brusque gonflement dudit cordeau après son activation. Ces zones de rupture sont identiques et disposées de façon coplanaire, c'est-à-dire au même niveau par rapport au cordeau pyrotechnique, et plus précisément au voisinage du sommet de l'extrémité arrondie qui se trouve du côté desdites zones de rupture. Les deux ailes sont, quant à elles, parallèles aux flancs plats du cordeau et de même épaisseur.

Dès l'activation du cordeau, ce dernier gonfle brusquement et percute les deux ailes, ce qui provoque la rupture desdites ailes au niveau de leurs zones de rupture, et donc la séparation, puis l'éloignement des deux éléments initialement raccordés par le dispositif, cet éloignement se produisant dans une direction parallèle aux flancs plats du cordeau.

Du fait de la parfaite symétrie du dispositif de raccordement précité, les ondes de choc apparaissant lors de l'impact du cordeau, qui se propagent au sein des ailes et se transmettent aux éléments limitrophes pour y induire des vibrations, sont au moins en partie neutralisées. En effet, les zones de rupture se sectionnent simultanément et de la même manière sous l'effet du gonflement du cordeau, ce qui engendre dans les deux ailes des ondes de choc non seulement en accord de phase, mais également de même nature et de même niveau, donc rigoureusement identiques. Il s'ensuit que, lors de la superposition de ces ondes au niveau des éléments limitrophes aux ailes, certaines des harmoniques s'annulent mutuellement. La vibration résultante subie par lesdits éléments, notamment celle que subirait un élément solidaire d'un engin spatial, s'en trouve donc significativement atténuée.

Ce dispositif de raccordement, à double découpe symétrique, permet donc la séparation de deux éléments au moyen d'un cordeau pyrotechnique, tout en limitant les vibrations qui ont été engendrées par l'impact du cordeau et que subissent lesdits éléments.

Toutefois, si ce dispositif convient parfaitement pour un éloignement axial des éléments, c'est-à-dire parallèle aux flancs plats du cordeau, on se heurte à un inconvénient majeur lorsqu'il s'agit d'écarter lesdits éléments suivant une direction au moins partiellement transverse auxdits flancs plats, comme c'est le cas dans la plupart des coiffes protectrices de satellite en plusieurs parties où une poussée est exercée dans la direction transverse auxdits flancs plats en vue de faciliter le déboîtement de chacune des parties desdites coiffes.

En effet, au niveau de chacune des ailes, la surface de cassure de chacune des deux parties séparées de l'aile, engendrée par la rupture consécutive à l'activation du cordeau, est irrégulière. Dès lors, lorsque lesdits deux éléments sont éloignés l'un de l'autre au moins en partie latéralement, lesdites deux parties séparées de l'aile risquent de s'accrocher mutuellement, au niveau des irrégularités dont sont pourvues leurs surfaces de cassure respectives. Il s'ensuit donc un éloignement relatif des deux éléments significativement dégradé.

De surcroît, dans le cas par exemple de la séparation d'un élément invariable (inférieur) et d'un élément éjectable (supérieur) formant la coiffe d'un engin spatial, ledit engin est propulsé dans une direction parallèle aux flancs plats du cordeau et dans un sens allant de l'élément invariable vers l'élément éjectable. La force de poussée engendrée par la propulsion dudit engin tend alors à rapprocher lesdits éléments après leur séparation, lesdits deux éléments étant alors susceptibles de se percuter et donc de s'accrocher mutuellement.

Pour remédier à ces inconvénients, le document EP 1 319 920 A1, qui constitue l'état de la technique le plus proche, décrit un séparateur pyrotechnique comprenant deux flancs d'assemblage de pièces enserrant entre eux un cordon pyrotechnique et comportant des zones d'affaiblissement disposées dissymétriquement par rapport au plan médian dudit séparateur, lesdites zones d'affaiblissement définissant ensemble une surface enveloppe de cassure tangente au cordon pyrotechnique et inclinée en tout point sur la direction prédéterminée de séparation de pièces.

La présente invention concerne un dispositif de raccordement entre deux éléments en forme de plaque :
- apte à être rompu par double découpe,
- compatible avec un éloignement des éléments se produisant au moins en partie transversalement aux flancs plats du cordeau pyrotechnique, c'est-à-dire dont les éléments ne s'accrochent pas lors de leur éloignement, et
- bénéficiant de la limitation des chocs induits que procure un dispositif de raccordement à double découpe parfaitement symétrique.

A cette fin, selon l'invention, le dispositif de raccordement entre deux éléments en forme de plaque, ledit dispositif étant apte à être rompu et comportant deux ailes sensiblement parallèles et disposées en regard l'une de l'autre :
- qui relient des bords en regard desdits éléments, en assurant ensemble la solidité mécanique dudit raccordement,
- qui ménagent entre elles une gorge dans laquelle est logé un cordeau pyrotechnique de section oblongue à flancs plats et extrémités arrondies, lesdits flancs plats étant sensiblement parallèles et respectivement disposés en regard desdites ailes, et
- qui sont pourvues chacune d'une zone de rupture, lesdites zones de rupture des deux ailes se trouvant du côté d'un même desdits éléments et étant disposées dissymétriquement par rapport au plan médian dudit dispositif pour ne pas s'opposer, après rupture résultant de l'activation dudit cordeau, à l'éloignement relatif desdits éléments au moins partiellement transversalement par rapport auxdits flancs plats dudit cordeau,
est remarquable en ce que :
- la zone de rupture de l'aile en amont de la direction dudit éloignement est disposée au voisinage du raccord entre, d'une part, le flanc plat dudit cordeau en regard de ladite aile amont et, d'autre part, l'extrémité arrondie dudit cordeau se trouvant du côté desdites zones de rupture,
- la partie de ladite aile amont, voisine de ladite zone de rupture amont et du côté opposé auxdites zones de rupture, présente une épaisseur supérieure à celle de la partie correspondante de l'aile en aval de la direction dudit éloignement, et
- la zone de rupture de ladite aile aval :
   o est disposée au voisinage du sommet de l'extrémité arrondie du cordeau se trouvant du côté desdites zones de rupture, et
   o présente une épaisseur supérieure à celle de ladite zone de rupture amont, de manière à compenser le retard entre les ondes de choc engendrées par l'activation dudit cordeau et transmises respectivement par lesdites ailes à l'élément se trouvant du côté desdites zones de rupture.

Ainsi, grâce à la présente invention, la rupture de l'aile amont est réalisée par un cisaillement pur, du fait :
- que le positionnement adéquat de la zone de rupture amont se trouve au voisinage de la jonction entre le flanc plat amont du cordeau et l'extrémité arrondie du cordeau du côté des zones de rupture, et
- que la sur-épaisseur de la partie de l'aile amont, voisine de la zone de rupture amont et du côté opposé aux zones de rupture, rend cette partie résistante à la déformation sous l'effet de l'impact du cordeau.

De la sorte, on s'assure que la surface de cassure de chacune des deux parties séparées de l'aile amont soit la plus plane possible, c'est-à-dire dans le plan perpendiculaire aux flancs plats du cordeau, et que cette surface présente un minimum d'aspérités. On évite donc que les deux parties séparées de ladite aile amont ne s'accrochent l'une à l'autre, par leurs surfaces résiduelles respectives, lors de leur éloignement relatif au moins en partie latéral.

De plus, grâce également à l'invention, la rupture de l'aile aval est réalisée par une flexion pure, du fait que le positionnement adéquat de la zone de rupture aval se trouve au voisinage du sommet de l'extrémité arrondie du cordeau du côté des zones de rupture. Ce mode de découpe tend à déformer l'aile aval sous l'effet de l'impact du cordeau pyrotechnique et provoque son enroulement autour dudit cordeau. La surface de cassure de chacune des deux parties séparées de ladite aile aval sont alors inclinées dans un sens qui permet d'éviter l'accrochage desdites deux parties lors de leur éloignement relatif au moins en partie latéral.

Grâce encore à l'invention, les chocs subis par l'élément qui se trouve du côté des zones de rupture - et que l'on souhaite protéger des vibrations - sont limités, du fait que l'on agit sur l'épaisseur de la zone de rupture aval en vue de compenser le retard entre les ondes de choc transmises audit élément respectivement par les deux ailes. Ce retard, engendré par la dissymétrie que l'on a introduite, est donc corrigé, de sorte que les ondes de choc soient transmises audit élément en accord de phase, ce qui permet, lors de leur superposition sur ledit élément, l'annulation mutuelle d'au moins une partie de leurs composantes.

Ainsi, selon l'invention, on introduit une dissymétrie dans les ailes afin d'éviter tout accrochage mécanique entre les deux éléments lors de leur éloignement au moins en partie latéral, ce qui peut paraître paradoxal quand on sait que c'est justement la symétrie des ailes qui autorise la limitation des chocs subis par lesdits deux éléments suite à l'activation du cordeau pyrotechnique. En effet, selon l'invention, l'avantage que procure la symétrie des ailes peut être, de façon étonnante, reproduit par l'arrangement particulier conforme à l'invention - toujours dissymétrique - des zones de rupture des deux ailes.

Selon une autre caractéristique de l'invention, l'épaisseur de la zone de rupture aval est déterminée de manière à permettre la rupture simultanée des ailes après l'activation du cordeau pyrotechnique. Il a en effet pu être observé, par l'étude comparative entre plusieurs types de configurations et les mesures de chocs correspondantes, que le temps de rupture est le paramètre qui prédomine généralement en ce qui concerne les vibrations subies par l'élément à protéger, au détriment d'autres paramètres tels que les temps de propagation des ondes de choc au sein des ailes. Or, du fait de la dissymétrie du dispositif, les efforts appliqués sur chaque zone de rupture sont différents. En agençant donc de manière adéquate les deux zones de rupture l'une par rapport à l'autre, on compense les conséquences de la dissymétrie, de sorte à obtenir, comme pour un dispositif à double découpe symétrique, des ruptures qui soient simultanées.

Dans le cas précité de la séparation d'un élément invariable et d'un élément éjectable formant la coiffe d'un engin spatial, ledit engin étant propulsé dans une direction parallèle aux flancs plats du cordeau pyrotechnique et dans un sens allant de l'élément invariable vers l'élément éjectable, il est susceptible de se produire, au niveau de l'aile amont et après la séparation des deux éléments, d'une part, le rapprochement de la partie inférieure vers la partie supérieure du fait de la propulsion de l'engin, et, d'autre part, l'entraînement de la partie supérieure vers l'intérieur de la coiffe. Les parties inférieure et supérieure de l'aile amont sont donc susceptibles de se percuter et il s'ensuit que la partie inférieure peut bloquer la partie supérieure de telle façon qu'elle empêche ladite partie supérieure d'être éjectée vers l'extérieur de la coiffe. Pour remédier à ce type de risque, selon une autre caractéristique de l'invention, la partie de l'aile amont, voisine de la zone de rupture amont et du côté des zones de rupture, présente une épaisseur sensiblement égale à celle de la partie de ladite aile amont, voisine de ladite zone de rupture amont et du côté opposé auxdites zones de rupture. Ainsi, la partie inférieure de l'aile amont forme une large table sur laquelle la partie supérieure peut éventuellement s'appuyer si ces deux parties sont amenées à se percuter. On évite alors tout blocage.

Selon une autre caractéristique de l'invention, le produit des épaisseurs de la zone de rupture amont et de la partie de l'aile amont, voisine de ladite zone de rupture amont et du côté opposé aux zones de rupture, est sensiblement proportionnel au produit des épaisseurs de la zone de rupture aval et de la partie de l'aile aval, voisine de ladite zone de rupture aval et du côté opposé auxdites zones de rupture. Les expériences et essais menés sur ces paramètres ont en effet permis d'observer que, de façon étonnante, la relation précitée produit un effet de compensation des ondes de choc.

Selon une autre caractéristique de l'invention, les ailes forment des parties saillantes de l'un des éléments ou bien d'un élément de raccordement unique fixé à chacun desdits éléments. Ainsi, les deux plaques peuvent être réalisées à partir d'une même pièce, qui peut être soit directement l'une des pièces à séparer, soit indirectement une pièce intermédiaire supplémentaire, ce qui facilite non seulement la fabrication des plaques mais également leur assemblage mécanique au reste du système.

Bien que chacune desdites ailes puisse s'étendre le long de la totalité de la longueur dudit cordeau, de préférence, le dispositif selon l'invention comporte une pluralité de couples d'ailes individuels ou individualisés répartis le long dudit cordeau.

Les figures du dessin annexé feront bien comprendre comment l'invention peut être réalisée. Sur ces figures, des références identiques désignent des éléments semblables.
La figure 1 est une coupe longitudinale schématique d'un dispositif de raccordement, selon l'invention, entre deux éléments en forme de plaque.
La figure 2 est une vue agrandie de la partie inférieure de ce même dispositif.
La figure 3 est une coupe correspondant à la figure 1 au moment de la rupture dudit dispositif.
La figure 4 est une coupe correspondant aux figures 1 et 3 lors de l'éloignement relatif des éléments raccordés par ledit dispositif.

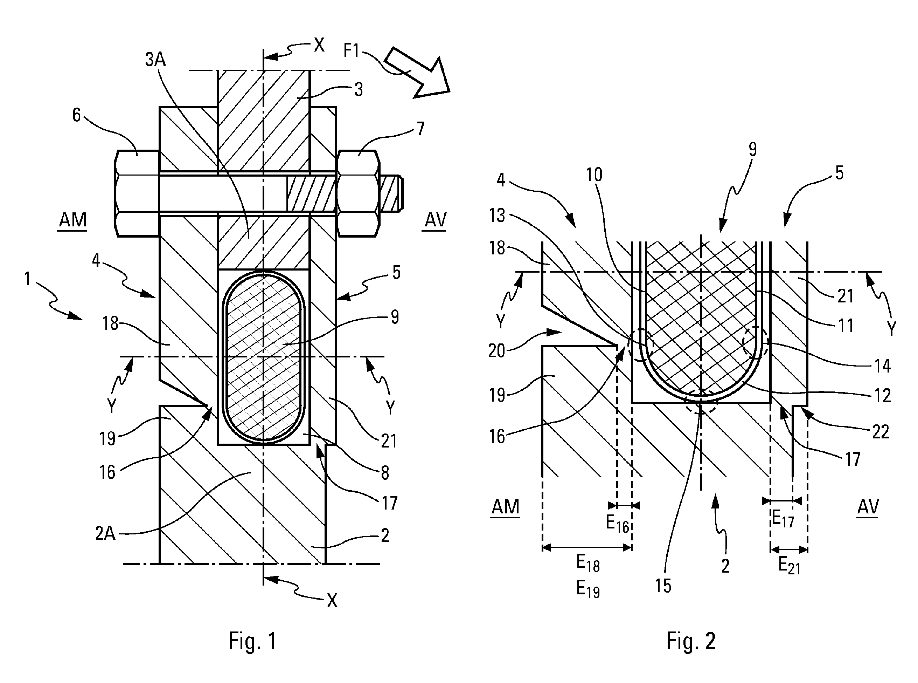

Le dispositif de raccordement 1 des figures 1 et 2 est destiné à assembler, puis à permettre de séparer deux éléments 2 et 3 en forme de plaque, tels que par exemple les enveloppes cylindriques externes formant deux des étages d'une structure haute d'un lanceur spatial. Parmi ces deux éléments à séparer, le premier élément 2 (inférieur) doit rester solidaire du lanceur spatial, tandis que le second élément 3 (supérieur) peut être éjecté, lors de la rupture du dispositif, dans une direction d'éloignement représentée par la flèche F1.

Pour opérer ce raccordement, le dispositif 1 comporte deux ailes 4 et 5, parallèles entre elles et disposées en regard l'une de l'autre. Ces ailes assurent ensemble la solidarisation mécanique du raccordement entre les éléments 2 et 3, en les reliant par leurs bords en regard 2A et 3A, ce qui peut se faire de différentes façons. Dans le présent exemple, il est prévu de réaliser l'extrémité supérieure de l'élément inférieur 2 de manière que lesdites deux ailes 4 et 5 forment des parties saillantes dudit bord 2A de l'élément 2, présentant ainsi une extrémité en forme de « U ». Le bord 3A de l'élément supérieur 3, quant à lui, présente une section déterminée de manière qu'il puisse être inséré entre les deux ailes saillantes de l'élément inférieur 2. Dès lors, après introduction du bord 3A de l'élément 3 entre les deux ailes 4 et 5 du bord 2A de l'élément 2, il est possible d'assembler lesdits bords 2A et 3A à l'aide d'un boulon traversant 6 coopérant avec un écrou 7.

Ce dispositif de raccordement est apte à être rompu pour permettre la séparation des éléments 2 et 3 et l'éjection de l'élément supérieur 3, afin par exemple de libérer un satellite jusque là enfermé dans une enveloppe formée des éléments 3. Par cette disposition, on définit une première aile amont 4, du côté amont de l'aile (AM), et une seconde aile aval 5, du côté aval de l'aile (AV), par référence à la direction d'éloignement F1 au moins en partie latérale.

On notera qu'un tel dispositif peut être aisément monté, dans la mesure où, préalablement à la fixation sur les deux éléments, les deux ailes et le cordeau pyrotechnique peuvent être assemblés. On forme ainsi un sous-système qui peut ensuite être fixé d'un bloc auxdits éléments.

Les deux ailes 4 et 5 ménagent entre elles une gorge 8 dans laquelle, en plus d'au moins une partie du bord 3A de l'élément 3, est logé un cordeau pyrotechnique 9. Le cordeau 9 est inséré, de façon connue, dans un tube expansible afin d'éviter une pollution ultérieure de l'espace. Il est disposé de façon à remplir presque intégralement la partie de la gorge 8 laissée libre par le bord 3A de l'élément 3, afin d'être le plus proche possible des ailes 4 et 5.

Le cordeau 9 présente une section oblongue, pourvue de deux flancs plats 10 et 11 raccordés par deux extrémités arrondies (une inférieure 12 et une supérieure non numérotée). Ces flancs 10 et 11 sont notamment liés à l'extrémité arrondie inférieure 12 (du côté de l'élément invariable 2) au niveau de raccords respectivement 13 et 14. Cette extrémité inférieure 12 présente un sommet 15. Les flancs 10 et 11 sont parallèles entre eux et parallèles à un axe longitudinal X-X, de manière à pouvoir être respectivement disposés en regard des ailes 4 et 5, elles-mêmes parallèles à l'axe X-X.

L'aile amont 4 est pourvue d'une zone de rupture 16 et l'aile aval d'une zone de rupture 17. La section de chacun de ces zones de rupture 16 et 17 est amoindrie suivant un axe Y-Y perpendiculaire aux flancs plats 10 et 11 du cordeau 9, ce qui rend également amoindrie la résistance desdites zones 16 et 17, vis-à-vis de l'impact et du brusque gonflement dudit cordeau 9. Ainsi, après l'activation du cordeau, celui-ci gonfle et frappe les ailes 4 et 5, ce qui engendre la rupture desdites ailes au niveau de leurs zones de rupture respectives 16 et 17 et, par là-même, la séparation des éléments 2 et 3. Ces zones de rupture sont disposées du côté de l'élément invariable 2 que l'on souhaite protéger des vibrations.

Le dispositif de raccordement 1 selon la présente invention est agencé pour que la rupture résultant de l'activation du cordeau 9 permette l'éloignement relatif des éléments 2 et 3 dans la direction et le sens de la flèche F1, ladite direction étant partiellement transverse aux flancs plats 10 et 11 dudit cordeau. Ce dispositif opère à cet effet une double découpe dissymétrique à mode de rupture mixte (cisaillement en amont, flexion en aval), les deux zones de rupture 16 et 17 étant non coplanaires, comme décrit ci-après en référence à la figure 2, qui correspond à une vue agrandie de la partie inférieure du dispositif de la figure 1.

La zone de rupture 16 de l'aile amont 4 est disposée, par rapport à l'axe X-X des flancs 10 et 11 du cordeau 9, du côté de l'élément inférieur invariable 2. Plus précisément, cette zone de rupture amont 16 est disposée au voisinage du raccord 13 entre, d'une part, le flanc plat 10 en regard de ladite aile amont 4 et, d'autre part, l'extrémité arrondie inférieure 12 (c'est-à-dire l'extrémité qui se trouve du côté de l'élément 2 et des zones de rupture 16 et 17). Cette zone de rupture 16 sépare ainsi l'aile amont 4 en deux parties : une partie supérieure 18 et une partie inférieure 19. Cette disposition est favorable à l'obtention d'une rupture de l'aile amont 4 par un cisaillement pur.

La zone de rupture amont 16 est par exemple obtenue en réalisant une simple entaille 20 en forme de « V » dans l'épaisseur de l'aile amont 4, de sorte que la surface inférieure de l'entaille (et donc la surface supérieure de la partie 19 de l'aile amont) soit parallèle à l'axe Y-Y. Il va de soi que d'autres variantes de réalisation sont envisageables, notamment une double entaille en « V » de part et d'autre de ladite partie 19.

La zone de rupture 17 de l'aile aval 5 est disposée, par rapport à l'axe X-X des flancs 10 et 11 du cordeau 9, du côté de l'élément inférieur invariable 2. Plus précisément, cette zone de rupture aval 17 est disposée au voisinage du sommet 15 de l'extrémité arrondie inférieure 12 du cordeau 9 (c'est-à-dire de l'extrémité qui se trouve du côté de l'élément 2 et des zones de rupture 16 et 17). Cette zone 17 est ainsi positionnée à l'extrémité inférieure de l'aile aval 5, de sorte qu'elle réalise la séparation entre, d'une part, la partie supérieure 21 de ladite aile aval 5 et, d'autre part, le tronc commun (non numéroté) de l'élément invariable 2, dont sont issues les parties saillantes formant les ailes 4 et 5. Cette disposition permet de rompre l'aile aval 5 par une flexion pure.

La zone de rupture aval 17 est par exemple obtenue en réalisant un épaulement 22, formant ainsi une discontinuité d'épaisseur entre l'aile aval 5 et le tronc commun de l'élément 2. Il va de soi que d'autres variantes de réalisation sont envisageables, notamment une simple entaille en « V ».

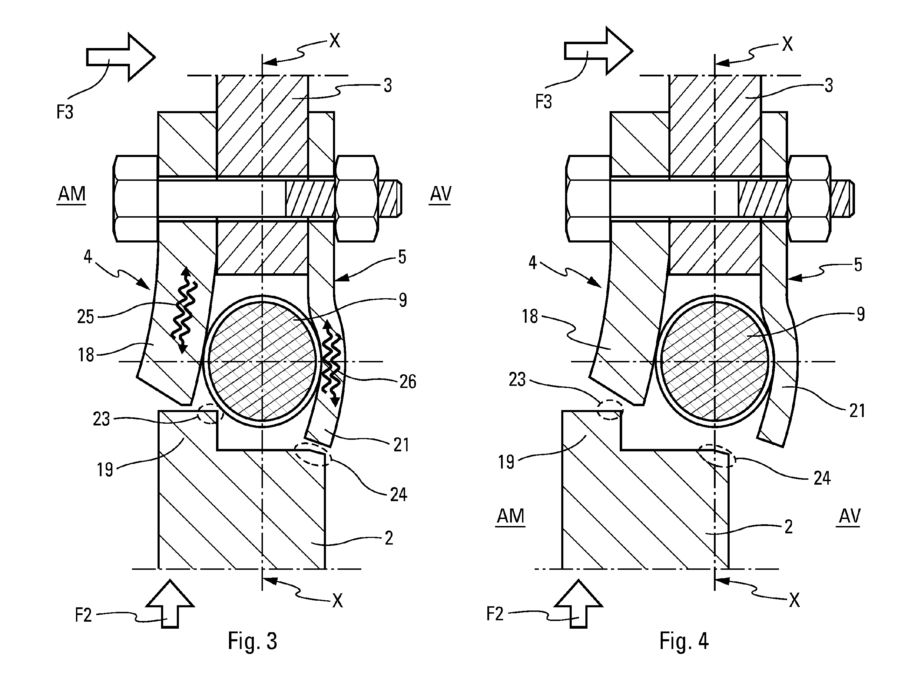

La partie supérieure 18 de l'aile amont 4, qui correspond à la partie de l'aile voisine de la zone de rupture amont 16 et du côté opposé à l'élément inférieur 2 et aux zones de rupture 16 et 17, présente une épaisseur E₁₈ supérieure à celle E₂₁ de la partie 21 correspondante de l'aile aval 5 (c'est-à-dire la partie supérieure 21 de l'aile aval 5, voisine de la zone de rupture 17 et se trouvant du côté opposé à l'élément inférieur 2 et aux zones de rupture). A tout le moins, la sur-épaisseur de cette partie 18 est déterminée de manière à éviter la déformation de ladite partie 18 sous l'effet de l'impact du cordeau 9, comme illustré ci-après en référence aux figures 3 et 4.

La partie inférieure 19 de l'aile amont 4, voisine de la zone de rupture amont 16 et se trouvant du côté de l'élément 2 et des zones de rupture 16 et 17, présente une épaisseur E₁₉ sensiblement égale à celle E₁₈ de la partie supérieure 18 de cette même aile amont 4, voisine de ladite zone de rupture amont 16 et se trouvant du côté opposé auxdites zones de rupture 16 et 17. A tout le moins, l'épaisseur E₁₈ est déterminée de manière à ce que la partie inférieure 19 puisse former un appui éventuel à la partie supérieure 18 après leur séparation et lors de leur éloignement relatif, dans le cas où une force de poussée tend à les rapprocher l'une de l'autre, comme illustré ci-après en référence aux figures 3 et 4.

La zone de rupture aval 17 présente une épaisseur E₁₇ supérieure à celle E₁₆ de la zone de rupture amont 16, ces deux épaisseurs étant spécifiquement déterminées l'une par rapport à l'autre - et par rapport à d'autres paramètres tels que les épaisseurs des autres parties des ailes - en vue de rompre les ailes 4 et 5 de façon simultanée suite à l'activation du cordeau 9, ce qui permet de compenser le retard entre les ondes de chocs engendrées par l'activation dudit cordeau et transmises respectivement par lesdites ailes à l'élément 2 que l'on souhaite protéger.

Les effets produits par cette configuration sont illustrés par les figures 3 et 4, qui montrent l'évolution du dispositif de raccordement à deux instants successifs après l'activation du cordeau pyrotechnique.

Quelques instants après l'activation, le cordeau pyrotechnique 9 gonfle de manière significative (figure 3). Il n'est alors plus oblong, mais adopte une forme quasi circulaire, ce qui entraîne sa mise en contact avec les parois des deux ailes 4 et 5. Le cordeau 9 frappe alors lesdites ailes, jusqu'à provoquer leur cassure au niveau de leurs zones de rupture respectives 16 et 17.

L'élément éjectable 3 est alors éjecté suivant la direction de la flèche F1 (figure 1), tout en subissant les forces représentées par les flèches F2 et F3 :
- une force de propulsion F2 de l'engin, dont la direction est parallèle aux flancs plats 10 et 11 du cordeau et le sens tend à rapprocher l'élément 2 de l'élément 3 après leur séparation, et
- une force d'éjection latérale F3 des parties de la coiffe de l'engin, dont la direction est perpendiculaire aux flancs plats 10 et 11 du cordeau et le sens tend à éjecter l'élément 3 vers l'extérieur AV de l'engin, du côté aval.

Au niveau de l'aile amont 4, du fait du positionnement de la zone de rupture 16, la découpe de cette dernière se produit par cisaillement pur. De plus, la sur-épaisseur pratiquée sur la partie supérieure 18 de l'aile amont rend celle-ci résistante à la déformation sous l'effet du brusque gonflement du cordeau 9, ce qui permet de ne pas déformer ladite aile 4 mais seulement de l'incliner. Il s'ensuit que la découpe de la zone de rupture amont 16 se fait de façon propre, laissant une surface de cassure 23 sensiblement plane au niveau de la partie inférieure 19, et il en est de même pour la surface de cassure (non numérotée) au niveau de la partie supérieure 18 de l'aile amont. Lors de leur éloignement relatif qui, dans les premiers instants suivant l'activation du cordeau (figure 3), se produit dans le sens opposé à celui de l'éjection des coiffes (F3) du fait de l'inclinaison de l'aile amont, les surfaces de cassure - sans irrégularités - des parties 18 et 19 ne s'accrochent donc pas.

Toujours au niveau de l'aile 4, lorsque les parties supérieure 18 et inférieure 19 viennent d'être séparées, la force de propulsion F2 rapproche la partie 19 de la partie 18. Puisque la partie 19 présente une épaisseur au moins égale à celle de la partie 18, cette dernière peut alors s'appuyer sur la partie 19 dans le cas où lesdites deux parties se rapprocheraient (figure 3), ce qui permet d'éviter que ladite partie supérieure 18 ne soit bloquée par la partie inférieure 19 et ne puisse dès lors plus être éjectée dans le sens de la force d'éjection F3 (figure 4).

Au niveau ensuite de l'aile aval 5, du fait du positionnement de la zone de rupture 17, la découpe de cette dernière se produit par flexion pure. De plus, l'épaisseur E₂₁ de la partie supérieure 21 de l'aile aval 5 étant faible, ladite partie supérieure 21 se déforme et s'enroule autour du cordeau après la cassure de l'aile aval. Dès lors, la surface de cassure 24 au niveau de l'élément 2 est sensiblement plane et inclinée par rapport à l'axe Y-Y, dans un sens qui permet d'éviter l'accrochage de l'élément 2 et de la partie 21 lors de leur éloignement relatif, ladite partie 21 se déformant en s'enroulant autour dudit cordeau 9, ce qui forme un jeu axial par rapport à la surface de cassure 24 de l'élément 2 et permet d'éviter tout contact à ce niveau.

Lors du gonflement du cordeau pyrotechnique 9, ce dernier impacte les ailes 4 et 5 et engendre la naissance d'ondes de choc 25 et 26 dans celles-ci. Ces ondes se propagent respectivement dans les ailes 4 et 5 pour ensuite, durant les premiers instants suivant la séparation (figure 3), être transmises notamment à l'élément inférieur 2, au sein duquel lesdites ondes 25 et 26 se propagent également et y induisent des vibrations. Du fait de la dissymétrie du dispositif 1, si les épaisseurs des zones de rupture 16 et 17 étaient égales, l'aile amont 4 romprait plus tard que l'aile aval 5, introduisant un retard entre les ondes de choc 25 et 26, ce qui peut induire un niveau élevé de vibrations au niveau de l'élément 2.

L'épaisseur E₁₇ de la zone de rupture aval 17 est déterminée pour compenser les effets de la dissymétrie du dispositif. Plus précisément, il est fait en sorte que cette épaisseur E₁₇ soit telle, par rapport à l'épaisseur E₁₆ et par rapport à d'autres paramètres tels que les épaisseurs des autres parties des ailes, que les ailes 4 et 5 se rompent au même moment, annihilant ainsi le retard entre les ondes de chocs 25 et 26 engendrées par l'activation du cordeau 9 et transmises respectivement par les ailes 4 et 5 à l'élément 2 que l'on entend protéger. Il a en effet été observé que le décalage entre les deux instants de rupture est le paramètre prépondérant parmi ceux qui influent sur le retard entre les ondes 25 et 26, et donc sur l'impact des chocs induits au niveau de l'élément 2.

On obtient ainsi, comme pour un dispositif symétrique, des ruptures simultanées des ailes 4 et 5, et donc des ondes de choc 25 et 26 sensiblement en accord de phase au moment de leur transmission à l'élément 2. Lorsque ces ondes se superposent, il se produit donc une annulation mutuelle d'une partie de leurs composantes, en particulier certaines harmoniques, et les vibrations induites s'en trouvent par conséquent limitées.

L'homme du métier comprendra que le choix de l'épaisseur E₁₇ est fonction de l'épaisseur E₁₆, mais également des positions des zones de rupture, des épaisseurs des parties des ailes hors zone de rupture, ainsi que des matériaux constituant lesdites ailes.

Dans le mode de réalisation illustré par les figures 1 à 4, le produit P₁ des épaisseurs, d'une part, de la zone de rupture amont 16 (E₁₆) et, d'autre part, de la partie supérieure 18 de l'aile amont 4 (E₁₈), voisine de ladite zone de rupture amont 16 et du côté opposé aux zones de rupture 16 et 17, est égal au produit P₂ des épaisseurs, d'une part, de la zone de rupture aval 17 (E₁₇) et, d'autre part, de la partie 21 de l'aile aval 5 (E₂₁), voisine de ladite zone de rupture aval 17 et du côté opposé auxdites zones de rupture.

Dans un mode de réalisation pratique, on a choisi les épaisseurs suivantes :
- épaisseur de la partie 18 (hors zone de rupture) de l'aile 4 : E₁₈ = 5 mm,
- épaisseur de la zone de rupture 16 de l'aile 4 : E₁₆ = 1,2 mm,
- épaisseur de la partie 21 (hors zone de rupture) de l'aile 5 : E₂₁ = 4 mm, et
- épaisseur de la zone de rupture 17 de l'aile 5 : E₁₇ = 1,5 mm.

On obtient alors un premier produit P₁ = E₁₈ * E₁₆ = 5 * 1,2 = 6 et un second produit P₂ = E₂₁ * E₁₇ = 4 * 1,5 = 6. On comprendra que, de par cette relation, si l'on modifie l'un de ces quatre paramètres, alors il importe de compenser ceci en modifiant un autre des paramètres, de manière à conserver la proportionnalité. On notera que, dans d'autres cas où la configuration est quelque peu différente, les produits P₁ et P₂ peuvent toujours être liés par un coefficient de proportionnalité, mais ce coefficient n'est pas nécessairement unitaire.

Lors de l'implémentation du dispositif selon l'invention pour constituer la coiffe d'un satellite, les deux éléments 2 et 3 à séparer sont disposés le long d'une ligne circulaire de manière à recouvrir le satellite à la manière d'une coupole. Il importe donc que le dispositif de raccordement puisse être compatible avec un agencement annulaire. A cet effet, il peut être prévu de munir le dispositif d'une pluralité de couples d'ailes, dont chacune, comportant une aile amont et une aile aval en regard l'une de l'autre, constitue une portion de couronne, ces couples d'ailes pouvant être disposés de façon adjacente ou espacée les uns des autres, le long du cordeau 9.

Afin de réduire le choc induit dans la structure lors de la déformation axiale du cordeau pyrotechnique et dès lors de protéger ledit cordeau contre le risque d'éclatement, il peut être prévu de positionner ponctuellement ledit cordeau à l'aide de plots (ou patins) en élastomère.

Afin, également, d'éviter certains effets circonférentiels (par exemple une rupture parasite), ainsi que de faciliter l'assemblage des parties supérieure et inférieure du dispositif, il peut être envisagé de répartir des fentes, sur la circonférence de la structure dudit dispositif, terminées par des trous afin de limiter la concentration de contrainte.

## Revendications

1. Dispositif (1) de raccordement entre deux éléments (2,3) en forme de plaque, ledit dispositif (1) étant apte à être rompu et comportant deux ailes (4,5) sensiblement parallèles et disposées en regard l'une de l'autre :
- qui relient des bords en regard desdits éléments (2,3), en assurant ensemble la solidité mécanique dudit raccordement,
- qui ménagent entre elles une gorge (8) dans laquelle est logé un cordeau pyrotechnique (9) de section oblongue à flancs plats (10,11) et extrémités arrondies (12), lesdits flancs plats (10,11) étant sensiblement parallèles et respectivement disposés en regard desdites ailes (4,5), et
- qui sont pourvues chacune d'une zone de rupture (16,17), lesdites zones de rupture (16,17) des deux ailes (4,5) se trouvant du côté d'un même (2) desdits éléments (2,3) et étant disposées dissymétriquement par rapport au plan médian dudit dispositif pour ne pas s'opposer, après rupture résultant de l'activation dudit cordeau (9), à l'éloignement relatif (F1) desdits éléments (2,3) au moins partiellement transversalement par rapport auxdits flancs plats (10,11) dudit cordeau (9),
la zone de rupture (16) de l'aile (4) en amont de la direction dudit éloignement (F1) étant disposée au voisinage du raccord (13) entre, d'une part, le flanc plat (10) dudit cordeau (9) en regard de ladite aile amont (4) et, d'autre part, l'extrémité arrondie (12) dudit cordeau (9) se trouvant du côté desdites zones de rupture (16,17),
**caractérisé en ce que** :
- la partie (18) de ladite aile amont (4), voisine de ladite zone de rupture amont (16) et du côté opposé auxdites zones de rupture (16,17), présente une épaisseur (E₁₈) supérieure à celle (E₂₁) de la partie (21) correspondante de l'aile (5) en aval de la direction (F1) dudit éloignement, et
- la zone de rupture (17) de ladite aile aval (5) :
o est disposée au voisinage du sommet (15) de l'extrémité arrondie (12) dudit cordeau (9) se trouvant du côté desdites zones de rupture (16,17), et
o présente une épaisseur (E₁₇) supérieure à celle (E₁₆) de ladite zone de rupture amont (16),
de manière à compenser le retard entre les ondes de choc (25,26) engendrées par l'activation dudit cordeau (9) et transmises respectivement par lesdites ailes (4,5) à l'élément (2) se trouvant du côté desdites zones de rupture (16,17).

2. Dispositif selon la revendication 1,
**caractérisé en ce que** l'épaisseur (E₁₇) de la zone de rupture aval (17) est déterminée de manière à permettre la rupture simultanée des ailes (4,5) après l'activation du cordeau pyrotechnique (9).

3. Dispositif selon la revendication 1 ou 2,
**caractérisé en ce que** la partie (19) de l'aile amont (4), voisine de la zone de rupture amont (16) et du côté des zones de rupture (16,17), présente une épaisseur (E₁₉) sensiblement égale à celle (E₁₈) de la partie (18) de ladite aile amont (4), voisine de ladite zone de rupture amont (16) et du côté opposé auxdites zones de rupture (16,17).

4. Dispositif selon l'une des revendications 1 à 3,
**caractérisé en ce que** le produit des épaisseurs
- de la zone de rupture amont (16) et
- de la partie (18) de l'aile amont (4), voisine de ladite zone de rupture amont (16) et du côté opposé aux zones de rupture (16,17),
est sensiblement proportionnel au produit des épaisseurs
- de la zone de rupture aval (17) et
- de la partie (21) de l'aile aval (5), voisine de ladite zone de rupture aval (17) et du côté opposé auxdites zones de rupture (16,17).

5. Dispositif selon l'une des revendications précédentes, **caractérisé en ce que** les ailes (4,5) forment des parties saillantes de l'un des éléments (2,3) ou d'un élément de raccordement unique fixé à chacun desdits éléments (2,3).

6. Dispositif selon l'une des revendications précédentes, **caractérisé en ce qu'**il comporte une pluralité de couples d'ailes (4,5) individuels ou individualisés répartis le long dudit cordeau (9).

## Patentansprüche

1. Vorrichtung (1) zum Anschluss zwischen zwei Elementen (2, 3) in Plattenform, wobei die Vorrichtung (1) geeignet ist, zerbrochen zu werden, und zwei im Wesentlichen parallele und einander gegenüberliegend angeordnete Flügel (4, 5) aufweist:
- welche gegenüberliegende Ränder der Elemente (2, 3) verbinden, wobei sie zusammen die mechanische Festigkeit des Anschlusses sicherstellen,
- welche zwischen sich eine Rinne (8) ausbilden, in welcher eine pyrotechnische Schnur (9) mit länglichem Querschnitt, mit flachen Flanken (10, 11) und abgerundeten Enden (12) aufgenommen ist, wobei die flachen Flanken (10, 11) im Wesentlichen parallel sind und jeweils gegenüber einem der Flügel (4, 5) angeordnet sind, und
- welche jeweils mit einem Bruchbereich (16, 17) versehen sind, wobei sich die Bruchbereiche (16, 17) der zwei Flügel (4, 5) auf der Seite ein und desselben (2) von den Elementen (2, 3) befinden und asymmetrisch bezüglich der Mittelebene der Vorrichtung angeordnet sind, um nach einem aus der Aktivierung der Schnur (9) resultierenden Bruch nicht dem relativen Entfernen (F1) der Elemente (2, 3) wenigstens teilweise quer zu den flachen Flanken (10, 11) der Schnur (9) im Wege zu stehen,
wobei der Bruchbereich (16) des bezüglich der Richtung des Entfernens (F1) vorgelagert angeordneten Flügels (4) in der Nähe des Anschlusses (13) zwischen einerseits der flachen Flanke (10) der Schnur (9), die dem vorgelagert angeordneten Flügel (4) gegenüberliegt, und andererseits dem abgerundeten Ende (12) der Schnur (9), das sich auf der Seite der Bruchbereiche (16, 17) befindet, angeordnet ist,
**dadurch gekennzeichnet, dass**:
- der Teil (18) des vorgelagert angeordneten Flügels (4), der dem vorgelagert angeordneten Bruchbereich (16) benachbart ist und sich auf der den Bruchbereichen (16, 17) gegenüberliegenden Seite befindet, eine Dicke (E₁₈) aufweist, die größer als die Dicke (E₂₁) des Teils (21) ist, der dem bezüglich der Richtung (F1) des Entfernens nachgelagert angeordneten Flügel (5) entspricht, und
- der Bruchbereich (17) des nachgelagert angeordneten Flügels (5):
∘ in der Nähe des Scheitelpunktes (15) des abgerundeten Endes (12) der Schnur (9), das sich auf der Seite der Bruchbereiche (16, 17) befindet, angeordnet ist, und
∘ eine Dicke (E₁₇) aufweist, die größer als die Dicke (E₁₆) des vorgelagert angeordneten Bruchbereiches (16) ist,
derart, dass die Verzögerung zwischen den Stoßwellen (25, 26) kompensiert wird, die durch die Aktivierung der Schnur (9) erzeugt werden und durch die jeweiligen Flügel (4, 5) auf das Element (2) übertragen werden, das sich auf der Seite der Bruchbereiche (16, 17) befindet.

2. Vorrichtung nach Anspruch 1,
**dadurch gekennzeichnet, dass** die Dicke (E₁₇) des nachgelagert angeordneten Bruchbereiches (17) derart bestimmt wird, dass der gleichzeitige Bruch der Flügel (4, 5) nach der Aktivierung der pyrotechnischen Schnur (9) ermöglicht wird.

3. Vorrichtung nach Anspruch 1 oder 2,
**dadurch gekennzeichnet, dass** der Teil (19) des vorgelagert angeordneten Flügels (4), der dem vorgelagert angeordneten Bruchbereich (16) benachbart ist und sich auf der Seite der Bruchbereiche (16, 17) befindet, eine Dicke (E₁₉) aufweist, die im Wesentlichen gleich der Dicke (E₁₈) des Teil (18) des vorgelagert angeordneten Flügels (4) ist, der dem vorgelagert angeordneten Bruchbereich (16) benachbart ist und sich auf der den Bruchbereichen (16, 17) gegenüberliegenden Seite befindet.

4. Vorrichtung nach einem der Ansprüche 1 bis 3,
**dadurch gekennzeichnet, dass** das Produkt der Dicken
- des vorgelagert angeordneten Bruchbereiches (16) und
- des Teils (18) des vorgelagert angeordneten Flügels (4), der dem vorgelagert angeordneten Bruchbereich (16) benachbart ist und sich auf der den Bruchbereichen (16, 17) gegenüberliegenden Seite befindet,
im Wesentlichen proportional zum Produkt der Dicken
- des nachgelagert angeordneten Bruchbereiches (17) und
- des Teils (21) des nachgelagert angeordneten Flügels (5), der dem nachgelagert angeordneten Bruchbereich (17) benachbart ist und sich auf der den Bruchbereichen (16, 17) gegenüberliegenden Seite befindet, ist.

5. Vorrichtung nach einem der vorhergehenden Ansprüche,
**dadurch gekennzeichnet, dass** die Flügel (4, 5) vorspringende Teile eines der Elemente (2, 3) oder eines einzigen Anschlusselements, das an jedem der Elemente (2, 3) befestigt ist, bilden.

6. Vorrichtung nach einem der vorhergehenden Ansprüche,
**dadurch gekennzeichnet, dass** sie mehrere einzelne oder individualisierte Paare von Flügeln (4, 5) aufweist, die entlang der Schnur (9) verteilt sind.

## Claims

1. A connecting device (1) between two plate-shaped elements (2, 3), said device (1) being adapted to be broken and comprising two substantially parallel opposite flanges (4, 5):
- connecting opposite edges of said elements (2, 3) by providing together the mechanical strength of said connection,
- arranging between them a groove (8) in which a pyrotechnic fuse (9) with an oblong section with flat flanks (10, 11) and rounded ends (12) is housed, said flat flanks (10, 11) being substantially parallel and respectively arranged opposite said flanges (4, 5), and
- each provided with a rupture area (16, 17), said rupture areas (16, 17) of both flanges (4, 5) being on the side of a same (2) of said elements 2, 3), and being dissymetrically disposed in relation with the median plane of said device, so as not to be opposed, after a rupture resulting from the activation of said fuse (9), to the relative removal (F1) of said elements (2, 3) at least in part transversally relative to said flat flanks (10, 11) of said fuse (9), the rupture area (16) of the flange (4) upstream from the direction of said removal (F1) being arranged in the vicinity of the connection (13) between, on the one side, the flat flank (10) of said fuse (9) opposite said upstream flange (4) and, on the other side, the rounded end (12) of said fuse (9) being on the side of said rupture areas (16, 17),
**characterized in that** :
- the part (18) of said upstream flange (4), being adjacent to said upstream rupture area (16) and on the side opposite said rupture areas (16, 17), presents a larger thickness (E₁₈) than the one (E₂₁) of the corresponding part (21) of the flange (5) downstream from the direction (F1) of said removal, and
- the rupture area (17) of said downstream flange (5):
∘ is arranged in the vicinity of the top (15) of the rounded end (12) of said fuse (9) located on the side of said rupture areas (16, 17), and
∘ presents a larger thickness (E₁₇) than the one (E₁₆) of said upstream rupture area (16),
so as to compensate for the delay between the shock waves (25, 26) generated by the activation of said fuse (9) and respectively transmitted by said flanges (4, 5) to the element (2) being located on the side of said rupture areas (16, 17).

2. The device according to claim 1,
**characterized in that** the thickness (E₁₇) of the downstream rupture area (17) is determined so as to allow the simultaneous rupture of the flanges (4, 5) after the activation of the pyrotechnic fuse (9).

3. The device according to one of claims 1 or 2,
**characterized in that** the part (19) of the upstream flange (4), adjacent to the upstream rupture area (16) and on the side of the rupture areas (16, 17), presents a thickness (E₁₉) being substantially equal to the one (E₁₈) of the part (18) of said upstream flange (4), adjacent to said upstream rupture area (16) and on the side opposite said rupture areas (16, 17).

4. The device according to any of claims 1 to 3,
**characterized in that** the product of the thicknesses
- in the upstream rupture area (16) and
- the part (18) of the upstream flange (4) adjacent to said upstream rupture area (16) and on the side opposite the rupture areas (16, 17),
is substantially proportional to the product of the thicknesses
- of the downstream rupture area (17) and
- of the part (21) of the downstream flange (5) being adjacent to said downstream rupture area (17) and on the side opposite said rupture areas (16, 17).

5. The device according to any of preceding claims, cha
racterized in that the flanges 4, 5) form projecting parts of one of the elements (2, 3) or of a single connecting element fastened to each of said elements (2, 3).

6. The device according to any of preceding claims, ch
aracterized in that it comprises a plurality of individual or individualized flange pairs (4, 5) distributed along said fuse (9).
